# FASCICULE DE BREVET EUROPEEN

(11) **EP 2 974 962 B1**
(45) Date de publication et mention de la délivrance du brevet: **15.01.2020**
(21) Numéro de dépôt: 15177236.5
(22) Date de dépôt: 17.07.2015
(51) Int. Cl.: B64D 11/06, F16B 2/18

(54) **SYSTÈME DE FIXATION À GENOUILLÈRE D'UN SIÈGE D'AÉRONEF**
BEFESTIGUNGSSYSTEM MIT HEBELGELENK FÜR LUFTFAHRZEUGSITZE
FIXATION DEVICE COMPRISING A TOGGLE JOINT, FOR AN AIRCRAFT SEAT

(30) Priorité: 18.07.2014 FR 1456945
(43) Date de publication de la demande: 20.01.2016
(73) Titulaire: Attax, 78420 Carrières sur Seine (FR)
(72) Inventeur: DANET, Romain, 78600 MAISONS-LAFFITTE (FR)
(74) Mandataire: Lavoix

(56) Documents cités:
- DE-A1- 19 851 392
- FR-A1- 2 857 400
- FR-A1- 2 947 773

## Description

La présente invention concerne un système de fixation d'un siège par exemple d'aéronef dans un rail du reste de cet aéronef.

Ce type de systèmes de fixation de siège est bien connu dans l'état de la technique. On pourra par exemple se reporter aux documents FR 2 947 772 et 2 947 773 au nom de la demanderesse.

Le document DE19851392 montre un autre système de fixation connu de l'état de la technique. Le document décrit toutes les caractéristiques du préambule de la revendication 1.

D'une façon générale, ce type de systèmes de fixation comporte une embase associée au reste du siège et comportant des moyens d'accrochage par serrage de celui-ci sur le rail de l'aéronef.

Ces moyens d'accrochage sont déplaçables entre des positions escamotée de montage/démontage du siège et active d'accrochage de celui-ci par exemple par un opérateur, par l'intermédiaire d'un levier de manœuvre déplaçable entres des positions escamotée de montage/démontage et active de blocage en position des moyens d'accrochage.

De plus ce levier comporte des moyens de verrouillage en position active de blocage.

Ces structures ont été développées pour répondre à un certain nombre d'exigences en matière de sécurité et de facilité de montage et de démontage des sièges dans ces applications.

Mais les tolérances de fabrication des pièces font qu'il est nécessaire de prévoir dans le système, des moyens d'absorption des variations de dimensions de l'une ou l'autre des pièces.

En particulier, on utilise par exemple des tampons en matière élastiquement déformable.

Mais malgré l'intégration de tels moyens, le résultat de la fixation n'est pas parfait et se traduit par exemple par des vibrations qui sont alors sources de bruits qui peuvent s'avérer gênants.

Le but de l'invention est donc de résoudre ces problèmes.

A cet effet l'invention a pour objet un système de fixation d'un siège par exemple d'aéronef dans un rail du reste de cet aéronef, du type comportant une embase associée au reste du siège et comportant des moyens d'accrochage par serrage de celui-ci sur le rail de l'aéronef, déplaçables entre des positions escamotée de montage/démontage du siège et active d'accrochage de celui-ci, par un opérateur par l'intermédiaire d'un levier de manœuvre déplaçable entre des positions escamotée de montage/démontage et active de blocage en position des moyens d'accrochage et qui comporte des moyens de verrouillage en position active de blocage, caractérisé en ce que le levier de manœuvre est associé à des moyens de franchissement de point dur à genouillère comprenant une chape d'articulation de biellettes également articulées sur l'embase et dont au moins l'une est associée aux moyens d'accrochage du siège pour déplacer ceux-ci entre leurs positions escamotée de montage/démontage du siège et active d'accrochage de celui-ci;
- les moyens d'accrochage du siège comprennent des moyens d'indexation, de centrage et de reprise d'efforts de l'embase sur le rail ;
- les moyens d'accrochage du siège comprennent des moyens de serrage de l'embase sur le rail ;
- les biellettes comportent une biellette avant dont une première extrémité est articulée sur l'embase, dont une seconde extrémité est articulée sur la chape d'articulation et dont une portion intermédiaire entre ses extrémités, comporte une surface de déplacement des moyens de centrage et de reprise d'efforts entre une position escamotée de réglage en position de l'embase et une position active de centrage et de reprise d'efforts ;
- les biellettes comportent une biellette arrière dont une première extrémité est articulée sur la chape, dont une portion intermédiaire est articulée sur l'embase, et dont une seconde extrémité est associée à des mors de serrage de l'embase sur le rail ;
- la seconde extrémité de la biellette arrière présente une forme générale de fourche à deux branches disposées de part et d'autre de l'embase et dont chacune est munie à son extrémité d'un mors de serrage ;
- les mors sont montés sur les extrémités d'une tige de guidage s'étendant entre les extrémités des branches de la fourche et traversant l'embase dans une lumière de guidage des déplacements de cette tige, les extrémités de la tige de guidage s'étendant dans des lumières des mors pour permettre un déplacement des mors entre leurs positions escamotée et active, perpendiculairement au rail ;
- le levier présente un débattement angulaire déterminé par rapport à la chape d'articulation, dans un sens de dégagement des moyens à franchissement de point dur pour faciliter le déverrouillage des moyens d'accrochage ;
- l'extrémité avant du levier comporte des moyens débrayables de verrouillage en position active de blocage de celui-ci ;
- les moyens de verrouillage comportent des moyens en forme de loquet portés par l'un des organes, levier ou embase, et adaptés pour coopérer en position active avec des moyens de retenue de l'autre organe, embase ou levier, pour verrouiller le levier en position active ;
- les moyens en forme de loquet sont déplaçables pour permettre à ces moyens en forme de loquet de franchir les moyens de retenue et de s'engager en position de verrouillage avec ceux-ci et de se dégager de ces moyens de retenue sous l'action de moyens de manœuvre rotatifs lors de leur débrayage actionnés par l'opérateur ;
- le levier comporte des moyens d'indication visuelle de son état de verrouillage ou non ;
- les moyens d'indication visuelle de l'état de verrouillage ou non du levier sont prévus sur sa face supérieure.

L'invention sera mieux comprise à l'aide de la description qui va suivre, donnée uniquement à titre d'exemple et faite en se référant aux dessins annexés sur lesquels :
- les figures 1 et 2 représentent des vues en perspective illustrant un système de fixation selon l'invention respectivement en position de montage/démontage du siège et en position d'accrochage de celui-ci, et
- les figures 3 et 4 représentent des vues de côté en coupe correspondantes du système.

On a en effet illustré sur ces figures, un système de fixation d'un siège par exemple d'aéronef dans un rail du reste de cet aéronef.

Le système est désigné par la référence générale 1 sur ces figures et comporte une embase associée au reste du siège.

Cette embase est désignée par la référence générale 2 et comporte par exemple dans sa partie arrière une oreille 3 de fixation d'une partie d'un siège.

Bien entendu différents modes de raccordement du siège à l'embase peuvent être envisagés. Le siège peut ainsi être venu de matière avec l'embase, raccordé à celle-ci par une pièce intermédiaire,...

Dans sa partie inférieure, cette embase comporte des talons en saillie tels que par exemple le talon 4, qui entrent dans la composition de moyens d'accrochage par serrage de celui-ci sur le rail de l'aéronef.

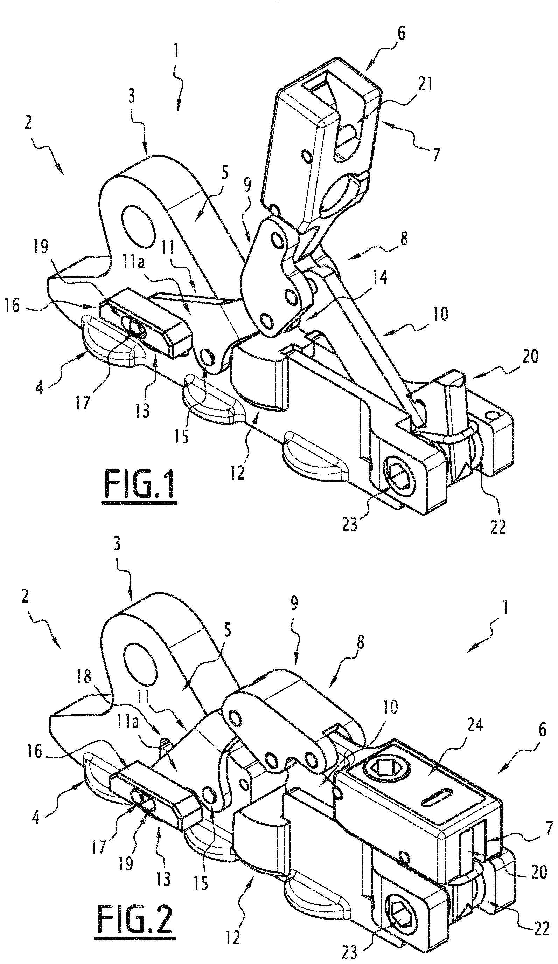

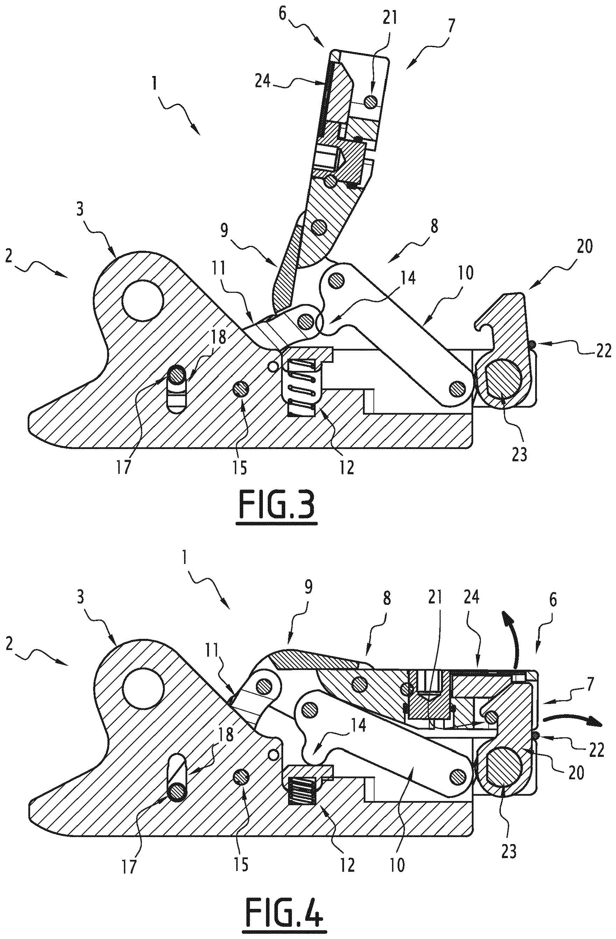

En effet l'embase comporte des moyens d'accrochage par serrage désignés par la référence générale 5, qui sont déplaçables, comme cela est illustré, entre des positions escamotée de montage/démontage du siège telle qu'illustrée sur les figures 1 et 3, et active d'accrochage de celui-ci telle qu'illustrée sur les figures 2 et 4, par un opérateur par l'intermédiaire par exemple d'un levier de manœuvre désigné par la référence générale 6.

En fait ce levier de manœuvre est déplaçable entres des positions escamotée de montage/démontage illustrée sur les figures 1 et 3, et active illustrée sur les figures 2 et 4, de blocage en position des moyens d'accrochage.

Comme cela sera décrit plus en détail par la suite, ce levier comporte également des moyens de verrouillage en position active de blocage désignés par la référence générale 7.

En fait et selon l'invention, le levier de manœuvre 6 est associé à des moyens à franchissement de point dur 8 de déplacement des moyens d'accrochage 5 entre les positions escamotée de montage/démontage du siège et active d'accrochage de celui-ci.

En effet et comme cela est illustré sur ces figures, le levier de manœuvre 6 est associé à des moyens à franchissement de point dur à genouillère, comprenant une chape d'articulation 9 de biellettes 10 et 11 également articulées sur l'embase et dont au moins l'une est associée aux moyens d'accrochage du siège pour déplacer ceux-ci entre leurs positions escamotée et active.

En fait l'utilisation de tels moyens à franchissement de point dur présente plusieurs avantages.

L'un des avantages de cette utilisation est la mise sous contrainte du système et l'absorption des tolérances de fabrication des pièces pour éviter la génération par exemple de vibrations ou de bruits.

Pour ce faire, dans le système selon l'invention on n'utilise pas de tampons en matériau élastique tels que par exemple en élastomère ou autre.

C'est le mécanisme à franchissement de point dur à genouillère, mettant en oeuvre des biellettes, qui assure cette mise sous contrainte.

Un autre avantage de l'utilisation d'un tel système est que les moyens à franchissement de point dur permet de définir de façon positive la position active de blocage du levier et des moyens d'accrochage et ce de façon indépendante de la sécurité apportée par les moyens de verrouillage en position de blocage du levier.

Dans l'exemple de réalisation illustré sur ces figures, les moyens d'accrochage du siège comprennent en fait deux types d'éléments à savoir des moyens de centrage et de reprise d'effort de l'embase sur le rail voire d'indexation de position, et des moyens de serrage de l'embase sur le rail.

Ces moyens sont désignés par les références 12 et 13 et sont associés respectivement aux biellettes 10 et 11.

Il apparaît en effet à la vue de ces figures que les biellettes comprennent une biellette avant 10 dont une première extrémité est articulée sur l'embase et dont une seconde extrémité est articulée sur la chape d'articulation 9. Une portion intermédiaire de cette biellette avant, entre ces extrémités, comporte une surface 14 de déplacement des moyens de centrage et de reprise d'effort voire d'indexation 12, constitués par exemple par un pion monté déplaçable élastiquement dans l'embase, entre une position haute escamotée de réglage en position de l'embase et une position basse active de centrage et de reprise d'effort voire d'indexation, dans le rail.

Dans l'exemple illustré, les biellettes comportent également la biellette arrière 11 dont une première extrémité est articulée sur la chape 9, dont une portion intermédiaire est articulée par exemple en 15 sur l'embase et dont une seconde extrémité est associée à des mors de serrage de l'embase sur le rail.

L'un de ces mors est désigné par la référence générale 16 sur les figures 1 et 2.

En fait et comme cela est illustré, la seconde extrémité de la biellette arrière 11 présente par exemple une forme générale de fourche à deux branches dont l'une est désignée par la référence générale 11A par exemple sur ces figures 1 et 2.

Ces branches s'étendent de part et d'autre de l'embase et chacune est munie à son extrémité d'un mors de serrage tel que le mors 16.

En fait ces mors 16 sont montés sur les extrémités d'une tige de guidage désignée par la référence générale 17 sur ces figures, s'étendant entre les extrémités des branches de la fourche et traversant l'embase dans une lumière par exemple 18 de guidage des déplacements de cette tige.

Les extrémités de la tige de guidage 17 s'étendent dans des lumières des mors tels que la lumière 19 pour le mors 16, pour permettre un déplacement des mors entre leurs positions escamotée et active, perpendiculairement au rail.

Il est également à noter que le levier peut présenter un débattement angulaire déterminé par rapport à la chape d'articulation 9, dans un sens de dégagement des moyens à franchissement de point dur, pour faciliter le déverrouillage des moyens d'accrochage par l'opérateur.

Comme cela a été indiqué précédemment, l'extrémité avant du levier 6 peut comporter des moyens débrayables 7 de verrouillage en position active de blocage de celui-ci.

Ces moyens présentent une structure relativement classique telle qu'elle a déjà été décrite dans les documents antérieurs mentionnés précédemment, à savoir qu'ils peuvent comporter des moyens en forme de loquet comme par exemple désignés par la référence générale 20 sur ces figures, portés par l'un des organes, levier ou embase, et adaptés pour coopérer en position active avec des moyens de retenue par exemple 21 de l'autre organe, embase ou levier, pour verrouiller le levier en position active.

Dans l'exemple décrit sur ces figures, les moyens en forme de loquet 20 sont portés par l'embase tandis que les moyens de retenue 21 sont prévus à l'extrémité du levier et se présentent par exemple sous la forme d'une tige de retenue.

Il va de soi bien entendu qu'une disposition inverse et des formes différentes de réalisation de ces moyens peuvent être envisagées.

On notera simplement que des moyens en forme de loquet peuvent être déplaçables élastiquement pour permettre à ceux-ci de franchir les moyens de retenue et de s'engager en position de verrouillage avec ceux-ci et de se dégager de ces moyens de retenue sous l'action de moyens de manœuvre rotatifs lors de leur débrayage, actionnés par l'opérateur.

Ceci est par exemple visible sur ces figures dans la mesure où l'on voit que les moyens en forme de loquet sont associés à des moyens élastiques désignés par la référence générale 22.

Les moyens de manœuvre rotatifs peuvent par exemple être formés par un outil comme une clé de manœuvre adaptée pour s'engager dans un évidement de l'extrémité d'une tige d'articulation 23 de ces moyens en forme de loquet à l'extrémité correspondante de l'embase.

De plus et comme cela est illustré sur ces figures et en particulier sur la figure 2, le levier 6 peut également comporter des moyens d'indication visuelle de son état de verrouillage ou non comme cela est connu en soi.

Ces moyens d'indication sont par exemple désignés par la référence générale 24 sur ces figures et sont par exemple prévus sur la face supérieure du levier.

En fait ces moyens d'indication peuvent par exemple être formés par une plaque témoin présentant deux parties de couleurs différentes telles que par exemple verte et rouge, et déplaçable devant une lumière du levier pour faire apparaître la partie de l'une ou l'autre de ces couleurs selon l'état de verrouillage ou non de ce levier.

On conçoit alors que le fonctionnement de cette structure est le suivant.

En position déverrouillée, telle qu'illustrée sur la figure 1, l'opérateur de montage peut régler la position du siège, le système de fixation se déplaçant sur le rail car celui-ci n'est pas pincé ni serré.

Une fois en position souhaitée, l'opérateur de montage abaisse le levier de la position illustrée 2 sur la figure 1 vers la position illustrée sur la figure 2.

Lors de ce déplacement le levier entraîne un pivotement de la chape d'articulation et donc un déplacement des biellettes avant et arrière.

La biellette avant vient en appui sur le pion 12 pour déplacer celui-ci tandis que la biellette arrière 11 bascule et provoque un pincement du rail entre les talons de l'embase et les mors de serrage.

Ce déplacement se poursuit et provoque le franchissement du point dur après passage en alignement des points d'articulation ou de fixation du levier et des biellettes sur la chape.

Le système est alors en position de serrage, le mécanisme à franchissement de point dur à genouillère provoque un rattrapage des jeux liés aux variations de dimensions des pièces.

De plus l'extrémité du levier 6 et plus particulièrement dans l'exemple décrit, des moyens de retenue 21, se sont engagés sous les moyens en forme de loquet 20, ces moyens en forme de loquet ayant reculé sous sollicitation élastique pour les laisser passer, afin d'obtenir la sécurité de fixation et le verrouillage en position qui ont été décrits précédemment.

Il va de soi bien entendu que de nombreux autres modes de réalisation encore peuvent être envisagés.

## Revendications

1. Système de fixation d'un siège par exemple d'aéronef dans un rail du reste de cet aéronef, du type comportant une embase (2) apte à être associée au reste du siège et comportant des moyens (5) d'accrochage par serrage de celui-ci sur le rail de l'aéronef, déplaçables entre des positions escamotée de montage/démontage du siège et active d'accrochage de celui-ci, par un opérateur par l'intermédiaire d'un levier de manœuvre (6) déplaçable entre des positions escamotée de montage/démontage et active de blocage en position des moyens d'accrochage et qui comporte des moyens de verrouillage (7) en position active de blocage, **caractérisé en ce que** le levier de manœuvre (6) est associé à des moyens de franchissement de point dur à genouillère (8) comprenant une chape (9) d'articulation de biellettes (10, 11) également articulées sur l'embase (2) et dont au moins l'une est associée aux moyens d'accrochage du siège pour déplacer ceux-ci entre leurs positions escamotée de montage/démontage du siège et active d'accrochage de celui-ci.

2. Système de fixation d'un siège selon la revendication 1, **caractérisé en ce que** les moyens d'accrochage du siège comprennent des moyens (12) d'indexation, de centrage et de reprise d'efforts de l'embase sur le rail.

3. Système de fixation d'un siège selon la revendication 1 ou 2, **caractérisé en ce que** les moyens d'accrochage du siège comprennent des moyens (13) de serrage de l'embase sur le rail.

4. Système de fixation d'un siège selon la revendication 2, **caractérisé en ce que** les biellettes comportent une biellette avant (10) dont une première extrémité est articulée sur l'embase, dont une seconde extrémité est articulée sur la chape d'articulation (9) et dont une portion intermédiaire entre ses extrémités, comporte une surface (14) de déplacement des moyens (12) de centrage et de reprise d'efforts entre une position escamotée de réglage en position de l'embase et une position active de centrage et de reprise d'efforts.

5. Système de fixation d'un siège selon l'une quelconque des revendications précédentes, **caractérisé en ce que** les biellettes comportent une biellette arrière (11) dont une première extrémité est articulée sur la chape (9), dont une portion intermédiaire est articulée sur l'embase (2), et dont une seconde extrémité est associée à des mors (16) de serrage de l'embase sur le rail.

6. Système de fixation d'un siège selon la revendication 5, **caractérisé en ce que** la seconde extrémité de la biellette arrière (11) présente une forme générale de fourche à deux branches (11a) disposées de part et d'autre de l'embase (2) et dont chacune est munie à son extrémité d'un mors de serrage (16).

7. Système de fixation d'un siège selon la revendication 6, **caractérisé en ce que** les mors (16) sont montés sur les extrémités d'une tige de guidage (17) s'étendant entre les extrémités des branches de la fourche et traversant l'embase (2) dans une lumière (18) de guidage des déplacements de cette tige (17), les extrémités de la tige de guidage s'étendant dans des lumières (19) des mors (16) pour permettre un déplacement des mors entre leurs positions escamotée et active, perpendiculairement au rail.

8. Système de fixation d'un siège selon l'une quelconque des revendications précédentes, **caractérisé en ce que** le levier (6) présente un débattement angulaire déterminé par rapport à la chape d'articulation (9), dans un sens de dégagement des moyens à franchissement de point dur (8) pour faciliter le déverrouillage des moyens d'accrochage.

9. Système de fixation d'un siège selon l'une quelconque des revendications précédentes, **caractérisé en ce que** l'extrémité avant du levier (6) comporte des moyens débrayables de verrouillage en position active de blocage de celui-ci.

10. Système de fixation d'un siège selon la revendication 9, **caractérisé en ce que** les moyens de verrouillage comportent des moyens en forme de loquet (20) portés par l'un des organes, levier ou embase, et adaptés pour coopérer en position active avec des moyens de retenue (21) de l'autre organe, embase ou levier, pour verrouiller le levier en position active.

11. Système de fixation d'un siège selon la revendication 10, **caractérisé en ce que** les moyens en forme de loquet (20) sont déplaçables pour permettre à ces moyens en forme de loquet de franchir les moyens de retenue (21) et de s'engager en position de verrouillage avec ceux-ci et de se dégager de ces moyens de retenue sous l'action de moyens de manœuvre (23) rotatifs lors de leur débrayage actionnés par l'opérateur.

12. Système de fixation d'un siège l'une quelconque des revendications précédentes, **caractérisé en ce que** le levier (6) comporte des moyens (24) d'indication visuelle de son état de verrouillage ou non.

13. Système de fixation d'un siège selon la revendication 12, **caractérisé en ce que** les moyens (24) d'indication visuelle de l'état de verrouillage ou non du levier (6) sont prévus sur sa face supérieure.

## Patentansprüche

1. System zum Befestigen eines Sitzes beispielsweise eines Luftfahrzeugs in einer Schiene des Übrigen dieses Luftfahrzeugs, das einen Sockel (2) aufweist, der geeignet ist, dem Übrigen des Sitzes zugeordnet zu werden, und Mittel (5) zum Festlegen durch Klemmen desselben auf der Schiene des Luftfahrzeugs aufweist, die zwischen einer eingeklappten Position der Montage/Demontage des Sitzes und einer aktiven Position des Festlegens desselben durch eine Bedienpersonen mittels eines Betätigungshebels (6) bewegbar sind, der zwischen einer eingeklappten Position der Montage/Demontage und einer aktiven Position des Blockierens in Position der Mittel zum Festlegen bewegbar ist und der Mittel (7) zum Verriegeln in der aktiven Position des Blockierens aufweist, **dadurch gekennzeichnet, dass** der Betätigungshebel (6) Mitteln (8) zum Übertreten eines Druckpunktes eines Kniehebels zugeordnet ist, die ein Gabelgelenk (9) für Schwingarme (10, 11) umfassen, die ebenfalls an dem Sockel (2) angelenkt sind und von denen mindestens einer den Mitteln zum Festlegen des Sitzes zugeordnet sind, um diese zwischen ihrer eingeklappten Position der Montage/Demontage des Sitzes und der aktiven Position des Festlegens desselben zu bewegen.

2. System zum Befestigen eines Sitzes nach Anspruch 1, **dadurch gekennzeichnet, dass** die Mittel zum Festlegen des Sitzes Mittel (12) zum Einrasten, Zentrieren und zur Kraftübernahme des Sockels auf die Schiene umfassen.

3. System zum Befestigen eines Sitzes nach Anspruch 1 oder 2, **dadurch gekennzeichnet, dass** die Mittel zum Festlegen des Sitzes Mittel (13) zum Festklemmen des Sockels auf der Schiene umfassen.

4. System zum Befestigen eines Sitzes nach Anspruch 2, **dadurch gekennzeichnet, dass** die Schwingarme einen vorderen Schwingarm (10) aufweisen, dessen erstes Ende an dem Sockel angelenkt ist, dessen zweites Ende an dem Gabelgelenk (9) angelenkt ist und dessen Zwischenbereich zwischen seinen Enden eine Fläche (14) zum Verschieben der Mittel (12) zum Zentrieren und zur Kraftübernahme zwischen einer versenkten Stellung der Positionseinstellung des Sockels und einer aktiven Stellung des Zentrierens und der Kraftübernahme aufweist.

5. System zum Befestigen eines Sitzes nach einem beliebigen der vorhergehenden Ansprüche, **dadurch gekennzeichnet, dass** die Schwingarme einen hinteren Schwingarm (11) aufweisen, dessen erstes Ende an dem Gabelgelenk (9) angelenkt ist, dessen Zwischenteil an dem Sockel (2) angelenkt ist und dessen zweites Ende Spannbacken (16) zum Festklemmen des Sockels auf der Schiene zugeordnet ist.

6. System zum Befestigen eines Sitzes nach Anspruch 5, **dadurch gekennzeichnet, dass** das zweite Ende des hinteren Schwingarms (11) eine allgemeine Form einer Gabel mit zwei Schenkeln (11a) aufweist, die beidseitig des Sockels angeordnet sind, und von denen jeder an seinem Ende mit einer Spannbacke (16) ausgerüstet ist.

7. System zum Befestigen eines Sitzes nach Anspruch 6, **dadurch gekennzeichnet, dass** die Spannbacken (16) an den Enden eines Führungsstiftes (17) montiert sind, der sich zwischen den Enden der Schenkel der Gabel erstreckt und den Sockel (2) in einer Öffnung (18) zur Führung der Bewegungen dieses Stiftes (17) durchquert, wobei die Enden des Führungsstiftes in Öffnungen (19) der Spannbacken (16) eingreifen, um eine Verschiebung der Spannbacken zwischen ihrer zurückgezogenen und aktiven Position senkrecht zur Schiene zu ermöglichen.

8. System zum Befestigen eines Sitzes nach einem beliebigen der vorhergehenden Ansprüche, **dadurch gekennzeichnet, dass** der Hebel (6) einen Winkelausschlag aufweist, der in Bezug auf das Gabelgelenk (9) in eine Richtung des Freisetzens der Mittel (8) zum Übertreten des Druckpunktes bestimmt ist, um die Entriegelung der Mittel zum Festlegen zu erleichtern.

9. System zum Befestigen eines Sitzes nach einem beliebigen der vorhergehenden Ansprüche, **dadurch gekennzeichnet, dass** das vordere Ende des Hebels (6) lösbare Mittel zum Verriegeln in der aktiven Position des Blockierens desselben aufweist.

10. System zum Befestigen eines Sitzes nach Anspruch 9, **dadurch gekennzeichnet, dass** die Verriegelungsmittel Mittel in Form eines Riegels (20) aufweisen, die von einem der Elemente, Hebel oder Sockel, getragen werden und angepasst sind, in der aktiven Position mit Mitteln (21) zum Halten des anderen Elementes, Sockel oder Hebel, zusammenzuarbeiten, um den Hebel in der aktiven Position zu verriegeln.

11. System zum Befestigen eines Sitzes nach Anspruch 10, **dadurch gekennzeichnet, dass** die Mittel in Form eines Riegels (20) bewegbar sind, um diesen Mitteln in Form eines Riegels zu gestatten, die Haltemittel (21) zu überschreiten und in der Verriegelungsposition mit diesen in Eingriff zu treten und von diesen Haltemitteln bei ihrer Entriegelung unter der Wirkung der durch die Bedienpersonen betätigten drehbaren Betätigungsmittel (23) außer Eingriff zu treten.

12. System zum Befestigen eines Sitzes nach einem beliebigen der vorhergehenden Ansprüche, **dadurch gekennzeichnet, dass** der Hebel (6) Mittel (24) zur visuellen Anzeige seines Zustands der Verriegelung oder Nichtverriegelung aufweist.

13. System zum Befestigen eines Sitzes nach Anspruch 12, **dadurch kennzeichnet, dass** die Mittel (24) zur visuellen Anzeige des Zustandes der Verriegelung oder Nichtverriegelung des Hebels (6) an seiner oberen Fläche vorgesehen sind.

## Claims

1. A fixation device for a seat, for example an aircraft seat, in a rail of the rest of that aircraft, of the type including a base (2) capable of being associated with the rest of the seat and including means (5) for attaching the latter by gripping it on the rail of the aircraft, movable between retracted assembly/disassembly and active attachment positions of the seat, by an operator using a maneuvering lever (6) movable between retracted assembly/disassembly and active position-blocking positions of the attachment means and which includes means (7) for locking in the active blocking position, **characterized in that** the maneuvering lever (6) is associated with toggle joint means for crossing a hard point (8) comprising articulation yoke (9) for connecting rods (10, 11) also articulated on the base (2), at least one of which is associated with the attachment means for the seat in order to move the latter between their retracted position for assembly/disassembly of the seat and the active attachment position thereof.

2. The fixation device for a seat according to claim 1, **characterized in that** the attachment means for the seat comprise indexing, centering and force reacting means (12) for the base on the rail.

3. The fixation device for a seat according to claim 1 or 2, **characterized in that** the attachment means for the seat comprise means (13) for gripping the base on the rail.

4. The fixation device for a seat according to claim 2, **characterized in that** the connecting rods include a front connecting rod (10), a first end of which is articulated on the base, a second end of which is articulated on the articulation yoke (9) and an intermediate portion of which between its ends includes a surface (14) for moving the centering and force reacting means (12) between a retracted position for adjusting the position of the base and an active centering and force reacting position.

5. The fixation device for a seat according to any of the preceding claims, **characterized in that** the connecting rods include a rear connecting rod (11), a first end of which is articulated on the yoke (9), an intermediate portion of which is articulated on the base (2), and a second end of which is associated with jaws (16) for gripping the base on the rail.

6. The fixation device for a seat according to claim 5, **characterized in that** the second end of the rear connecting rod (11) is generally fork-shaped with two branches (11a) positioned on either side of the base (2), each of which is provided with a gripping jaw (16) at its end.

7. The fixation device for a seat according to claim 6, **characterized in that** the jaws (16) are mounted on the ends of a guide rod (17) extending between the ends of the branches of the fork and crossing through the base (2) in a guide aperture (18) for the movements of that rod (17), the ends of the guide rod extending in apertures (19) of the jaws (16) to allow the jaws to move between the retracted and active positions, perpendicular to the rail.

8. The fixation device for a seat according to any of the preceding claims, **characterized in that** the lever (6) has a determined angular travel relative to the articulation yoke (9), in a release direction of the means for crossing the hard point (8) to facilitate the unlocking of the attachment means.

9. The fixation device for a seat according to any of the preceding claims, **characterized in that** the front end of the lever (6) includes disconnectable locking means in the active blocking position thereof.

10. The fixation device for a seat according to claim 9, **characterized in that** the locking means include latch-forming means (20) supported by one of the members, lever or base, and suitable for cooperating in the active position with retaining means (21) of the other member, base or lever, to lock the lever in the active position.

11. The fixation device for a seat according to claim 10, **characterized in that** the latch-forming means (20) are movable to allow those latch-forming means to cross the retaining means (21) and become engaged in the locking position therewith, and to extricate themselves from said retaining means under the action of rotating maneuvering means (23) during their disconnection actuated by the operator.

12. The fixation device for a seat according to any of the preceding claims, **characterized in that** the lever (6) includes means (24) for visually indicating its locking or unlocking state.

13. The fixation device for a seat according to claim 12, **characterized in that** the visual means (24) for indicating the locked or unlocked state of the lever (6) are provided on its upper face.
